# EUROPÄISCHE PATENTSCHRIFT

(11) **EP 3 605 268 B1**
(45) Veröffentlichungstag und Bekanntmachung des Hinweises auf die Patenterteilung: **25.03.2026**
(21) Anmeldenummer: 19178332.3
(22) Anmeldetag: 05.06.2019
(51) Int. Cl.: G05G 5/06, G05G 25/04

(54) **RASTBOLZEN MIT GESCHÜTZTER RASTMECHANIK**
LOCKING PIN WITH PROTECTED LATCHING MECHANISM
BOULON D'ENCLIQUETAGE À MÉCANIQUE D'ENCLIQUETAGE PROTÉGÉE

(30) Priorität: 01.08.2018 DE 102018118617
(43) Veröffentlichungstag der Anmeldung: 05.02.2020
(73) Patentinhaber: Otto Ganter GmbH & Co. KG Normteilefabrik, 78120 Furtwangen (DE)
(72) Erfinder: GANTER, Stefan, 78120 Furtwangen (DE)
(74) Vertreter: Riebling, Peter

(56) Entgegenhaltungen:
- EP-A1- 3 098 461
- EP-A2- 1 236 910
- DE-A1- 102008 047 041
- US-A- 4 113 221

## Beschreibung

Gegenstand der Erfindung ist ein Rastbolzen mit geschützter Rastmechanik nach dem Oberbegriff des Patentanspruches 1.

In Abstimmung mit allen relevanten Industriezweigen wie der Lebensmittel-, Pharma-und Kosmetikindustrie oder Biotechnologie sehen die staatlichen Gesundheitsbehörden sowohl ihre Hauptaufgabe als auch ihr Anliegen darin, Produkte zur Ernährung oder Behandlung von Menschen und im erweiterten Sinn auch von Tieren so weit wie möglich frei von schädlichen Einflüssen zu halten. Im Rahmen dieser Politik ist die Unbedenklichkeit, Qualität und Haltbarkeit des an den Verbraucher abgegebenen Produktes entscheidend. Alle Bestrebungen des Verbraucherschutzes zielen deshalb auf Produktsicherheit ab, um sowohl vorbeugend als auch nachhaltig vor toxischen Substanzen und relevanten Mikro-organismen zu schützen und gesundheitliche Risiken auszuschließen.

Für die genannten Industriebereiche, in denen zum Teil hygienisch hochsensible Produkte hergestellt werden, ist es charakteristisch, dass die Zielrichtung der Gesetzgebung ursprünglich allein Hygiene-und Qualitätsmaßnahmen der hergestellten Produkte umfasste, während bei den Prozessanlagen lediglich der Reinigungszustand vor Prozessbeginn eine wichtige Randbedingung darstellte. In den vergangenen Jahren sind zu diesen Anforderungen gesetzliche Vorgaben hinzugekommen: "Hygienic Design", d. h. die leicht reinigbare und hygienegerechte Gestaltung der Prozessanlagen, als wichtige Voraussetzung für sichere Produktion im Sinne des Verbraucherschutzes.

Neuere Erkenntnisse und wirtschaftliche Betrachtungen zeigen, dass nur über die Kombination der beiden Zielgrößen "Produkt" und "Produktionsanlage" die angestrebte hochwertige Qualität der Erzeugnisse mit langer Lebensdauer zu erreichen ist.

In dem Fachbuch "Gerhard Hauser: Hygienische Produktionstechnologie, 2008, S. 1-7, WILEY-VCH Verlag GmbH & Co. KGaA, Weinheim, ISBN: 978-3-527-30307-3 wird anhand von grundlegenden Beispielen die Idee von Hygienic Design oder der "hygienegerechten Gestaltung" vermittelt.

Unter Hygiene werden dabei heute, ergänzend zu der grundlegenden Bedeutung "Gesundheit" bzw. "die Gesundheit fördernd" auch alle Bereiche verstanden, die das Vermeiden von Risiken und Gefahren für die menschliche Gesundheit durch Kontamination aufgrund von relevanten Mikroorganismen und anderen Substanzen beim Konsum von Produkten zum Ziel haben.

Aus diesem Grund muss das Herstellungsverfahren unter verfahrenstechnischen Gesichtspunkten (z. B. Abstimmung von Massenströmen, Verweilzeiten, Temperaturen) optimiert und im Hinblick auf mögliche Produktbeeinflussung kontrolliert werden. Um eine zusätzliche Kontamination durch Mikroorganismen und qualitätsmindernde Substanzen auszuschließen, steht am Ende eines jeden Produktionszyklus die Reinigung von Anlagen, Apparaten und Komponenten sowie -vor allem bei Prozessen, die währen der Produktion zur Umgebung offen sind oder inspiziert werden müssen-des Prozessumfeldes. Als Ergebnis einer umfassenden Qualitätssicherung müssen alle negativen Einflüsse auf das Produkt ursächlich ausgeschaltet werden.

Während man in vielen Bereichen der angesprochenen Industrien Produktverarbeitung und Reinigung von jeher als gleich wichtig einordnete, wurde lange Zeit der starke Einfluss einer hygienegerechten Anlagen-und Bauteilgestaltung als nicht relevant angesehen oder einfach vernachlässigt.

In manchen Bereichen herrschte die Meinung vor, dass durch entsprechend hohe Konzentrationen von geeigneten, zum großen Teil aggressiven Reinigungs-und Desinfektionsmitteln sowie durch ausreichend lange Reinigungszeiten und hohe Temperaturen für praktisch jede Anlage der Reinigungserfolg sichergestellt werden kann. Außerdem wurde man häufig mit dem Argument konfrontiert, dass bei Produkten, die unmittelbar vor dem Abfüllen oder Verpacken pasteurisiert oder sterilisiert werden, Aspekte der Hygiene während der Herstellung nicht unbedingt die entscheidende Rolle spielen, da letztendlich die Abtötung von relevanten Mikroorganismen im letzten Schritt entscheidend ist.

Außer Acht gelassen wird dabei, dass eine erhöhte Belastung des Produktes mit Mikroorganismen bereits während der Produktion dessen Qualität entscheidend beeinflussen kann und Maßnahmen zur Dekontamination erschwert und verteuert. Darüber hinaus ist die verstärkte Gefahr der Entstehung toxischer Stoffwechselprodukte bei erhöhter und unkontrollierter Anzahl an Mikroorganismen zu berücksichtigen.

Aufgrund von Lernprozessen in diesem Bereich hat sich in den vergangenen Jahren die Blickrichtung entscheidend geändert, wobei ganz wesentlich die Forderung nach hygienegerechtem Anlagendesign mit in den Vordergrund gerückt wurde. Fachbegriffe wie Hygienic Design oder reinigungsgerechte Gestaltung sind mittlerweile in aller Fachleuten Munde, die mit Hygienefragen im Zusammenhang mit Produktion und Produktionsanlagen zu tun haben. Durch entsprechende konstruktive Gestaltungsmaßnahmen, die inzwischen in verschiedenen Bereichen auch gesetzlich gefordert werden, soll durch Hygienic Design die Reinigbarkeit und damit der Reinigungserfolg verbessert sowie die Reinigung sicherer gemacht werden.

Mit den auf den gleichen Anmelder zurückgehenden Schutzrechten DE202015003789U1, DE10338621B4, DE102008047041B4, DE202008013348U1 und EP2163772B1 ist es bekannt, die Rastmechanik bei einem Rastbolzen außenliegend, d. h. am radialen, unteren Umfang einer Führungshülse anzuordnen.

Die dort beschriebene Funktion eines Rastbolzens soll in vollem Umfang von der Offenbarung der vorliegenden Erfindung umfasst sein.

Der Gegenstand der EP 2 163 772 B2 offenbart eine im Betätigungsknopf angeordnete Rastmechanik, die ungeschützt am unteren freien Ende des Betätigungsknopfes gegenüberliegend zu einer Führungshülse angeordnet ist. Der Betätigungsknopf ist dabei federbelastet axial verschiebbar auf der Führungshülse geführt. An der Führungshülse ist ein Einschraubgewinde angeordnet, mit dem die Führungshülse an einer beliebigen Maschinenfläche eingeschraubt werden kann.

Im Deckenbereich des Betätigungsknopfes ist eine nicht abgedichtete Ausnehmung zur Aufnahme eines dort federbelastet verschiebbaren Entriegelungsknopfes angeordnet. Die Rastmechanik für den Rastbolzen besteht aus am Innenumfang des hülsenartigen Ansatzes des Betätigungsknopfes radial auswärts gerichteten Führungsnasen, die mit gegenüberliegenden radialen Ringansätzen im Bereich der Führungshülse zusammenwirken. Schmutzpartikel und andere Verunreinigungen können somit in den Zwischenraum zwischen der Führungshülse und dem nach unten offenen Betätigungsknopf gelangen und die Funktion der Rastmechanik beeinträchtigen.

Darüber hinaus besteht der Nachteil, dass eine solche Anordnung gesteigerten Hygieneansprüchen nicht genügt, weil die radial nach außen aus der Führungshülse herausstehenden Teile der Rastmechanik der Verschmutzung unterliegen, bruchgefährdet sind und im Übrigen den Anforderungen eines Hygienic Designs nicht entsprechen. Es können sich dort Schmutznester bilden, die einen Einsatz der bekannten Rastbolzen in hygienegeschützten Umgebungen verhindern.

Der Erfindung liegt deshalb die Aufgabe zugrunde, einen Rastbolzen mit einer an sich bekannten Rastmechanik so weiterzubilden, dass er entsprechend einem Hygiene Design den erhöhten Hygieneanforderungen genügt.

Zur Lösung der gestellten Aufgabe ist die Erfindung durch die technische Lehre des Anspruches gekennzeichnet.

In einer bevorzugten Ausgestaltung der Erfindung ist vorgesehen, dass die Rastmechanik in den abgedichteten Innenraum des Betätigungsknopfes verlegt ist, was bedeutet, dass sich die (erste) Führungshülse mit axialen hülsenartigen Ansätzen in eine zentrale Mittenbohrung des Betätigungsknopfes hinein erstreckt und dass die Rastmechanik abgedichtet im Bereich zwischen den axialen Ansätzen der Führungshülse - die dadurch eine zweite Führungshülse bilden - und der zentralen Mittenbohrung des Betätigungsknopfes angeordnet ist.

In einer bevorzugten Ausführung ist vorgesehen, dass die Rastmechanik abgedichtet in der zentralen Mittenbohrung des Betätigungsknopfes angeordnet ist, und dass sich die zweite Führungshülse mit ihren koaxialen, zweiten Ansätzen abgedichtet in die zentrale Mittenbohrung des Betätigungsknopfes hinein erstreckt.

Damit wird erstmals erreicht, dass in oder an der äußeren, den verschiebbaren Raststift oder Bolzen aufnehmenden ersten Führungshülse keinerlei Teile der Rastmechanik ungeschützt hervorstehen, diese sind vielmehr abgedichtet in den Innenraum des Betätigungsknopfes einerseits und in die zweite Führungshülse mit axialen Ansätzen andererseits aufgenommen, wobei die zweite Führungshülse ein werkstoffeinstückiges Teil mit der ersten Führungshülse bildet.

Die erste Führungshülse ist somit völlig glatt und eben und gegenüber dem Betätigungsknopf abgedichtet ausgebildet und die gesamte Rastmechanik ist im Betätigungsknopf selbst geschützt und abgedichtet angeordnet ist.

Zur Erreichung besonderer hygienischer Anforderungen können die Führungshülse und/oder der Betätigungsknopf aus einem polierten Edelstahlmaterial bestehen, dessen Oberflächenrauigkeit weniger als 0,04 Mikrometer beträgt.

Die Rastmechanik besteht nach einer bevorzugten Ausgestaltung der Erfindung aus einer in der zentralen Mittenbohrung des Betätigungsknopfes angeordneten Rasthülse, die als einseitig offene Hülse ausgebildet ist und die fest und unverschiebbar koaxial in der zentralen Mittenbohrung des Betätigungsknopfes mit dem Betätigungsknopf verbunden ist.

Die drehfeste Verbindung zwischen der Rasthülse und der inneren Seite des Betätigungsknopfes wird durch einen axial hochstehenden Arretierzapfen erreicht, welcher Arretierzapfen in eine zugeordnete Sackbohrung an der Innenseite des Betätigungsknopfes eingreift und somit die Rasthülse fest und unverschiebbar mit dem Betätigungsknopf verbindet.

Statt einer drehfesten Befestigung mit einem Arretierzapfen zwischen der Rasthülse und der Innenseite des Betätigungsknopfes können selbstverständlich auch alle anderen Befestigungsmittel verwendet werden, wie z. B. eine Klebeverbindung, eine Klemmverbindung oder andere Verbindungsarten, die dafür sorgen, dass die Rasthülse drehfest und unverschiebbar im Innenraum des Betätigungsknopfes aufgenommen ist.

In einer Weiterbildung der Erfindung kann es auch vorgesehen sein, dass die Rasthülse und der Betätigungsknopf ein einziges einstückiges Teil bilden, was bedeutet, dass beispielsweise, wenn der Betätigungsknopf aus Kunststoff besteht, die Rasthülse ebenfalls als werkstoffeinstückiges Kunststoffteil im Innenraum des Betätigungsknopfes mit diesem werkstoffeinstückig verbunden ist.

Es handelt sich in diesem Fall um ein homogenes Spritzgussteil, welches den Betätigungsknopf mit der Rasthülse stoffschlüssig miteinander verbindet.

Die Führungshülse kann in einer beliebigen Befestigungsart an einer Befestigungsfläche festgelegt werden, z. B. in der Art einer Klemmbefestigung, einer Schraubbefestigung, oder eine Befestigung in Verbindung mit einer Schraubmutter, Keil und anderen Befestigungen.

Wichtig ist, dass über die Führungshülse radial hinausstehende Teile der Rastmechanik nicht mehr vorhanden sind, sondern die gesamte Rastmechanik, bestehend aus Rasthülse und den zugeordneten gegenüberliegenden und gehäuseartigen Rastkonturen im Innenraum des Rastbolzens und zwar im Innenraum des Betätigungsknopfes abgedichtet angeordnet ist.

Damit ist die Rastmechanik im Innenraum des Betätigungsknopfes vollkommen gegenüber der Umgebung abgedichtet, denn die an der Innenseite des Betätigungsknopfes angeordnete Stangendichtung sorgt für eine sichere Abdichtung gegenüber dem Außenumfang der zylindrischen Führungshülse.

Statt einer solchen Stangendichtung können jedoch auch andere Dichtanordnungen verwendet werden, wie z. B. eine O-Ring-Dichtung, eine Schnurring- oder Stopfbuchsendichtung oder andere Dichtungsmaßnahmen.

Wenn es auf verschärfte Hygieneanforderungen nicht ankommt, kann die vorher beschriebene Stangendichtung auch vollständig entfallen.

Die Rastung des Rastbolzens mit der innen integrierten Rastmechanik erfolgt dergestalt, dass der Betätigungsknopf im eingerasteten Zustand nach unten auf der zylindrischen Führungshülse federbelastet eingerastet ist, und zwar entgegen der Kraft einer zugeordneten Druckfeder.

Zum Ausrasten wird der Betätigungsknopf um etwa 90° gedreht, und zwar solange, bis die Rastkontur der Rasthülse außer Eingriff mit der gehäusefesten, gegenüberliegenden Rastausnehmung an der Führungshülse kommt, wodurch aufgrund der Federkraft der verwendeten Druckfeder der Betätigungsknopf selbsttätig in die angehobene Stellung verschoben wird. Er gelangt damit in eine arretierte Drehstellung, d. h. er kann im ausgerasteten Zustand nicht mehr selbständig verdrehen.

Dies hat den Vorteil, dass man den Betätigungsknopf nicht erst entgegen der Kraft der Druckfeder anheben muss, sondern man kann ihn sofort drehen, um ihn von der einen Raststellung in die andere zu bringen, ohne ihn anheben zu müssen.

In einer bevorzugten Ausgestaltung der Erfindung ist die Rastkontur als schräg zur Längsachse gerichtete Fase ausgebildet, die aus zwei voneinander getrennten Kreisabschnitten bestehen, die unterschiedlichen Radius aufweisen. Der eine Kreisabschnitt ist als Rastkontur ausgebildet, während die sich daran anschließenden weiteren Kreisabschnitte als nichtrastende Bogenabschnitte ausgebildet sind.

Anstatt der Ausbildung von zwei diametral gegenüberliegenden Rastkonturen, die gehäusefest und in der Rasthülse angeordnet sind, kann es auch vorgesehen sein, dass z. B. vier derartige Rastkonturen sternförmig zueinander angeordnet sind. Es sind auch andere Geometrien möglich.

Der Erfindungsgegenstand der vorliegenden Erfindung ergibt sich nicht nur aus dem Gegenstand der einzelnen Patentansprüche, sondern auch aus einer beliebigen Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch einen Rastknopf nach der Erfindung im ausgerasteten Zustand
- Figur 2:: der Schnitt durch den Rastknopf im eingerasteten Zustand
- Figur 3:: eine perspektivische Ansicht des Betätigungsknopfes mit Darstellung der Rastmechanik im eingerasteten Zustand
- Figur 4:: die gleiche Darstellung wie Figur 3 im ausgerasteten Zustand
- Figur 5:: eine gegenüber Figur 4 gleiche Darstellung des Betätigungsknopfes im eingerasteten Zustand
- Figur 6:: eine perspektivische Darstellung der Rasthülse
- Figur 7:: eine Stirnansicht der Rasthülse in Richtung des Pfeiles VII in Figur 6
- Figur 8:: ein Schnitt durch die Rasthülse nach Figuren 6 und 7
- Figur 9:: ein Längsschnitt durch die Führungshülse
- Figur 10:: eine Stirnansicht auf die Führungshülse in Richtung des Pfeiles X in Figur 9

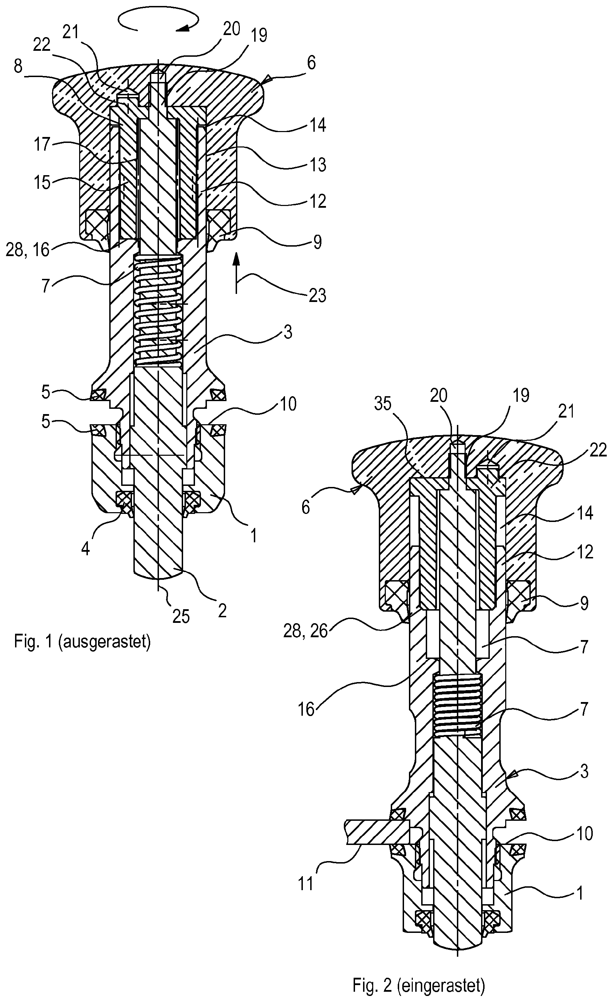

In den Figuren 1 und 2 ist allgemein ein Rastknopf dargestellt, der im gezeigten Ausführungsbeispiel im Wesentlichen aus einem oberen Betätigungsknopf 6 besteht, der aus einem beliebigen Material bestehen kann, bevorzugt aus einem Metall- oder Kunststoffmaterial.

Die Rastmechanik ist in der zentralen Mittenbohrung 14 des Betätigungsknopfes 6 angeordnet, die im gezeigten Ausführungsbeispiel im Wesentlichen aus einer Rasthülse 8 besteht, die drehfest und unverschiebbar im Innenraum des Betätigungsknopfes 6 aufgenommen ist und die mit einer zugeordneten, etwa zylindrisch ausgebildeten Führungshülse 3 zusammenwirkt, wobei die Führungshülse 3 ebenfalls aus einem beliebigen Material bestehen kann, wie z. B. einem Metall- oder einem Kunststoffmaterial.

Zur Erreichung der geforderten Hygieneanforderungen ist vorgesehen, dass in der zentralen Mittenbohrung 14 die Rastmechanik, bestehend aus der Rasthülse 8 angeordnet ist und dass im Übrigen von der Führungshülse 3 keine radial abstehenden Teile vorhanden sind, die zu der Rastmechanik gehören und die möglicherweise verschmutzungsanfällig wären.

Die Führungshülse 3 kann demnach an einer beliebigen Befestigungsfläche mit einer beliebigen Verschraubung oder Festlegung angebracht werden. Im gezeigten Ausführungsbeispiel - was nicht beschränkend für die Erfindung ist -, ist vorgesehen, dass die Führungshülse 3 an seinem unteren Ende einen ersten umlaufenden Dichtring 5 aufweist, der in einem radialen Ansatz der Führungshülse 3 eingebettet ist.

Gegenüberliegend zu diesem radial im Durchmesser vergrößerten Ansatz mit dem Dichtring 5 ist eine Dichtmutter 1 vorgesehen, die ebenfalls an ihrem radialen Außenumfang mit einem Dichtring 5 versehen ist, der dort ebenfalls eingebettet ist.

Die Dichtmutter 1 ist im Übrigen mit einem weiteren Dichtring 4 auf einem zugeordneten Außengewinde auf der Führungshülse 3 aufgeschraubt.

Im Zwischenraum zwischen den beiden sich gegenüberliegenden Dichtringen von Führungshülse 3 und Dichtmutter 1 ist eine (dadurch abgedichtete) Klemmaufnahme 10 ausgebildet, in die beispielsweise eine Befestigungsplatte 11 eingreifen kann, wodurch der gesamte Rastbolzen auf einer - nur teilweise dargestellten - Befestigungsplatte und in einer dort angeordneten Bohrung festgelegt werden kann.

Anstatt der abgedichteten Schraubbefestigung des Rastknopfes mit der gezeigten Dichtmutter 1 sind selbstverständlich alle anderen abgedichteten Befestigungsarten möglich, wie z. B. eine abgedichtete Verschraubung in einer zugeordneten Zylinderbohrung einer Befestigungsplatte oder auch Keil-, Klemmoder Klebeverbindungen.

Im gezeigten Ausführungsbeispiel weist die Führungshülse 3 eine zentrale Mittenbohrung 17 auf, in der in axialer Richtung verschiebbar ein Bolzen 2 federbelastet aufgrund der Kraft einer Druckfeder 7 verschiebbar ausgebildet ist.

Im gezeigten Ausführungsbeispiel greift der Bolzen 2 durch die Bohrung der Dichtmutter 1 in abgedichteter Weise hindurch und bildet so ein Betätigungsende, wodurch der Bolzen 2 in eine maschinenfeste Bohrung eines nicht dargestellten Maschinengehäuses einrasten kann oder außer Eingriff mit dieser maschinenfesten Bohrung gebracht werden kann.

Zur Erfüllung der gesteigerten Hygieneanforderungen gemäß dem allgemeinen Beschreibungsteil ist ferner vorgesehen, dass an der unteren Fußseite des Betätigungsknopfes 6 eine radial einwärts gerichtete Stangendichtung 9 integriert ist, die sich mit ihrem Innenumfang abdichtend am Außenumfang der Führungshülse 3 anlegt, so dass der gesamte Betätigungsknopf 6 in axialer Richtung (in Pfeilrichtung 23 und in Gegenrichtung) verschiebbar federbelastet auf der zylindrischen Führungshülse 3 abgedichtet bewegbar ist.

Statt einer integrierten Stangendichtung 9 können auch andere Abdichtmaßnahmen verwendet werden, wie z. B. eine O-Ring-Dichtung, eine Schnurringdichtung oder die Stangendichtung 9 kann bei verminderten Hygieneanforderungen auch vollkommen entfallen.

Wichtig ist jedenfalls, dass am Außenumfang der Führungshülse 3 keinerlei Teile der Rastmechanik mehr vorhanden sind, weil diese vollkommen in der zentralen Mittenbohrung 14 des Betätigungsknopfes 6 integriert ist.

Zu diesem Zweck greift die Führungshülse 3 mit einer nach oben offenen zweiten Führungshülse 12, die integraler Bestandteil der ersten Führungshülse 3 ist, in die zentrale Mittenbohrung des Betätigungsknopfes ein und der Außenumfang der zweiten Führungshülse 12 bildet eine Gleitfläche 13 zum Innenumfang des Betätigungsknopfes im Bereich der zentralen Mittenbohrung 14.

Die hygiene-gerechte Ausführung wird dadurch erreicht, dass die Rastmechanik 27, 28 in der zentralen Mittenbohrung des Betätigungsknopfes 6 am inneren Stirnseitenbereich 35 der zentralen Mittenbohrung 17 durch die in axialer Entfernung angeordnete Stangendichtung 9 abgedichtet angeordnet ist, und sich die Führungshülse 3 mit der koaxialen, zweiten axialen Führungshülse 12 abgedichtet in die zentrale Mittenbohrung 14 des Betätigungsknopfes 6 durch die Stangendichtung 9 abgedichtet hinein erstreckt.

Der Bolzen 2 ist mit einem oberen Gewindebolzen 19 werkstoffeinstückig oder werkstoffgetrennt verbunden, der in eine zugeordnete Bohrung 18 an der Innenseite des Betätigungsknopfes 6 eingeschraubt ist.

Statt einer solchen Schraubverbindung können auch andere Verbindungen, wie z.B. eine Klebeverbindung oder eine Schweißverbindung verwendet werden. Ebenso ist es möglich, dass der Gewindebolzen 19 als Niet-Bolzen ausgebildet ist und mit dem Betätigungsknopf 6 vernietet ist.

Die Rastmechanik besteht im Wesentlichen aus einer hülsenförmigen Rasthülse 8, die mit ihrem einen, azentrisch und in axialer Richtung gerichteten Arretierzapfen 22 in einer Sackbohrung 21 des Betätigungsknopfes 6 im Bereich der inneren Stirnseitenwand 35 festgelegt ist und dort unverschiebbar gehalten ist. Sie ist demnach drehfest und unverschiebbar mit dem Betätigungsknopf 6 verbunden.

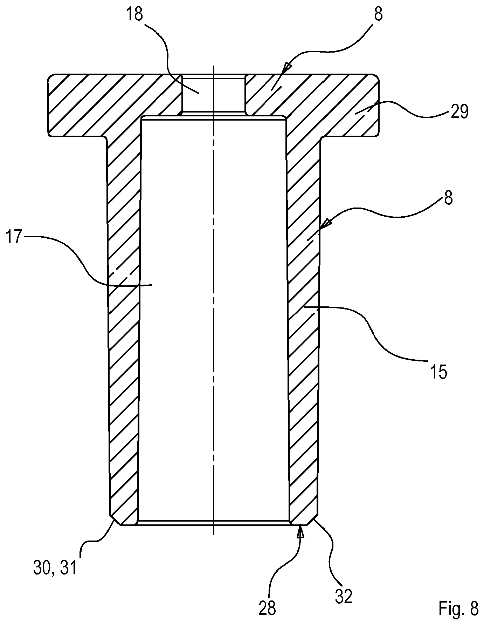

Die hülsenförmige Rasthülse 8 bildet einen axial nach unten sich erstreckenden Hülsenansatz 15 aus, der ebenfalls eine zentrale Mittenbohrung 17 definiert, (siehe Figur 8).

Die Mittenbohrung 17 mit dem eingezeichneten, mittigen radialen Spiel kann auch vollkommen entfallen, weil sich der Hülsenansatz 15 der Rasthülse 8 auch formschlüssig am Außenumfang des Bolzens 2 anlegen kann.

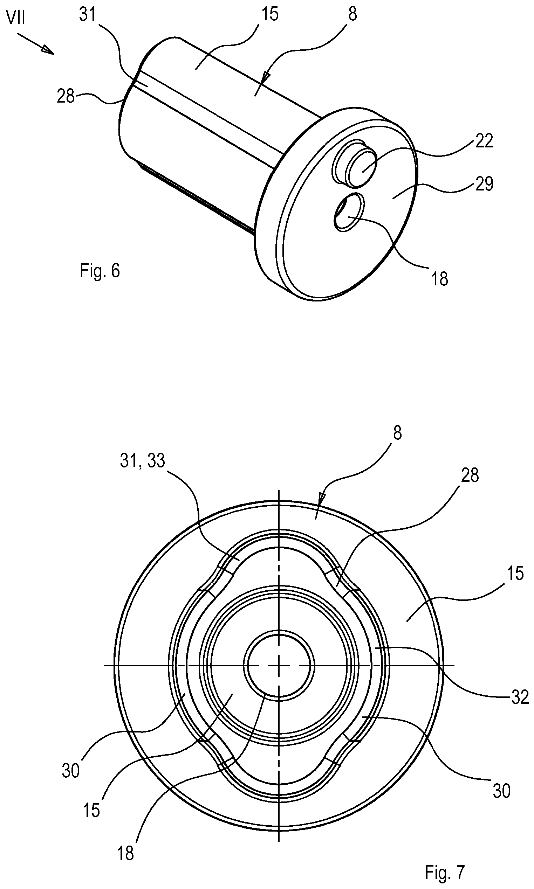

Die Rastmechanik selbst wird gebildet durch eine stirnseitige Anschlagfläche 16 in der Führungshülse 3, die mit einer zugeordneten Rastkontur 28 der Rasthülse 8 zusammenwirkt, wie später noch anhand der weiteren Zeichnungen gemäß Figuren 6 bis 8 beschrieben werden wird.

Während die Figur 1 die ausgerastete Stellung des Rastbolzens zeigt, zeigt die Figur 2 die eingerastete Stellung. Diese unterscheidet sich von der Figur 1 dadurch, dass der Betätigungsknopf 6 in Pfeilrichtung 23 nach oben bewegt wurde und indem er hochgezogen wurde und dabei die Druckfeder 7 komprimiert wurde.

Er wird also entgegen der Kraft der Druckfeder 7 in seine eingerastete Stellung in Pfeilrichtung 23 nach oben gezogen und um 90° verdreht, nämlich beispielsweise in Pfeilrichtung 24 um seine Längsachse 25 herum.

Die Figur 2 zeigt im Vergleich zur Figur 1, dass nun der Betätigungsknopf 6 um 90° gedreht wurde.

Statt einer 90°-Drehung zur Erreichung der beiden Rastpositionen können auch andere Drehwinkel vorgesehen werden, wie z. B. 30°, 60°, 120° oder dergleichen mehr. Dies hängt von der Art der Rastkontur 28, 34 ab, die anhand der Zeichnungen Figur 6 bis 8 beschrieben werden wird. Es können auch mehr als zwei Rastpositionen vorgesehen sein.

Es wird noch angefügt, dass an der Innenseite des Betätigungsknopfes 6 eine zentrale Gewindebohrung 20 eingearbeitet ist, in welche der Gewindebolzen 19 des Bolzens 2 eingeschraubt ist.

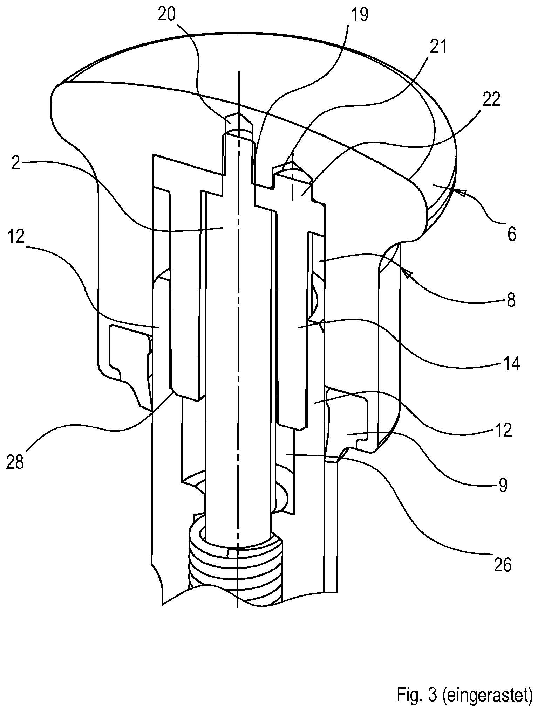

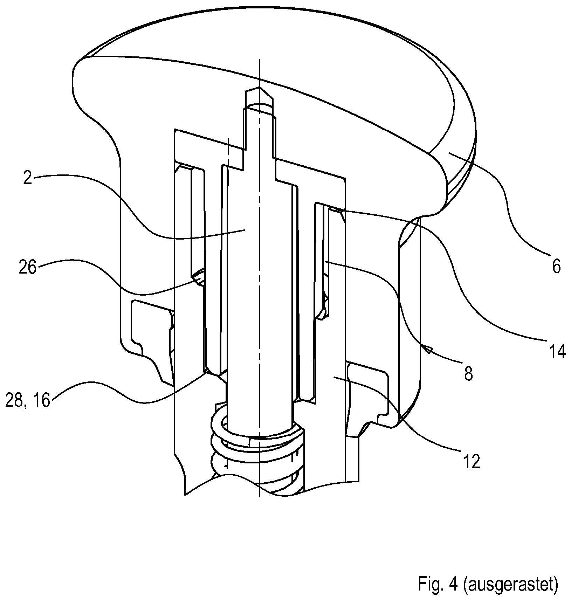

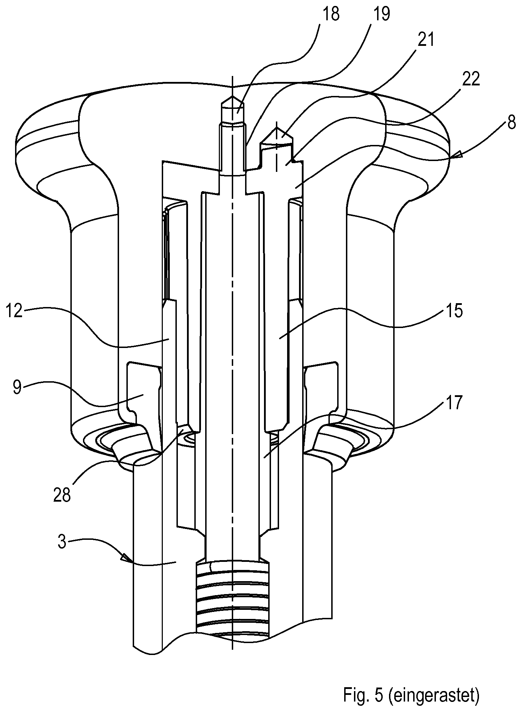

Die Figuren 3, 4 und 5 zeigen die gleichen Teile mit den gleichen Bezugszeichen, wobei die Figur 3 den eingerasteten Zustand gemäß Figur 2 darstellt, die Figur 4 den ausgerasteten Zustand gemäß Figur 1 und die Figur 5 wiederum den eingerasteten Zustand gemäß Figur 2.

Die gleichen Teile sind mit den gleichen Bezugszeichen versehen, so dass die Erläuterung gemäß den Figuren 1 und 2 auch für die Bezeichnungen und Teile der Figuren 3 bis 5 gelten.

Die Figur 6 zeigt die perspektivische Darstellung einer Rasthülse 8, die im Wesentlichen aus einem zylindrischen Ringansatz 29 besteht, der eine zentrale Bohrung aufweist, durch welche der Bolzen 2 hindurchgreift.

Azentrisch zur zentralen Bohrung 18 ist dabei ein Arretierzapfen 22 angeformt, der gemäß dem vorstehenden Ausführungsbeispielen in eine zugeordnete Sackbohrung 21 im Innenbereich des Betätigungsknopfes 6 eingreift und dort verankert ist.

Eine solche Befestigung hat den Vorteil, dass eine besonders betriebssichere und einfache Befestigung der Rasthülse 8 im Innenraum des Betätigungsknopfes 6 gewährleistet ist.

An der unteren Stirnseite des Hülsenansatzes 15 ist dabei eine rasthülsenseitige Rastkontur 28 ausgebildet, wobei sich die zur Rastkontur 28 gehörende Rastnase 31 in den Hülsenansatz 15 hinein erstreckt.

In einer anderen Ausgestaltung kann es auch vorgesehen sein, dass der Hülsenansatz 15 zylindrisch ausgebildet ist und die radial davon abstehenden einander gegenüberliegenden Rastnasen 31 lediglich unten im Bereich der Rastkontur 28 angeformt sind.

Die Figur 7 zeigt die besondere Ausbildung der Rastkontur 28 der Rasthülse 8 an der unteren Stirnseite, wo erkennbar ist, dass die beiden diametral gegenüberliegenden Rastnasen 31 einen Rastbereich 33 ausbilden und dazwischenliegende Bogenabschnitte 30 vorhanden sind, die nicht rastend ausgebildet sind.

Dabei wird es bevorzugt, wenn die Rastnasen 31 im Bereich einer schräg verlaufenden Fase 32 ausgebildet sind, wie anhand der Figur 8 erkennbar ist.

Die Figur 8 zeigt, dass die Rastkontur im Bereich der schräg im Winkel zur Längsachse verlaufenden Fase 32 ausgebildet ist.

Die Ausbildung der Rastkontur 28 in einer schräg verlaufenden Fase 32 gemäß Figur 8 hat den Vorteil, dass man nicht den Betätigungsknopf 6 erst entgegen der Kraft der Druckfeder 7 anheben muss, sondern man kann ihn sofort drehen, um ihn von der einen Raststellung in die andere zu bringen, ohne ihn anheben zu müssen.

Die Fase 32 bildet also sozusagen eine Auflaufschräge auf der gehäuseseitigen Rastkontur 34, so dass ein Anheben des Betätigungsknopfes nicht erforderlich ist.

Statt einer schräg verlaufenden Fase 32, wie in Figur 8 dargestellt ist, kann es in einer Ausgestaltung natürlich vorgesehen sein, dass diese bevorzugte komfortable Drehbewegung, die ohne Zugbewegung auskommt, ersetzt wird durch eine kombinierte Zug-Drehbewegung.

In dem zuletzt genannten Fall würde die Fase 32 dann entfallen, und es wäre dann eine glatte Stirnfläche vorhanden, die nicht im Winkel zur Vertikalen geneigt ist.

In diesem Fall müsste aber dann der Betätigungsknopf 6 mit dem fest damit verbundenen Bolzen 2 entgegen der Kraft der Druckfeder 7 angehoben werden.

Anstatt der hier als schräg verlaufende gerade ausgebildete Fase 32 können auch bogenförmige Fasen verwendet werden, d. h. die schräg verlaufende Gerade gemäß Figur 8, welche die Fase 32 ausbildet, kann auch bogenförmig profiliert sein.

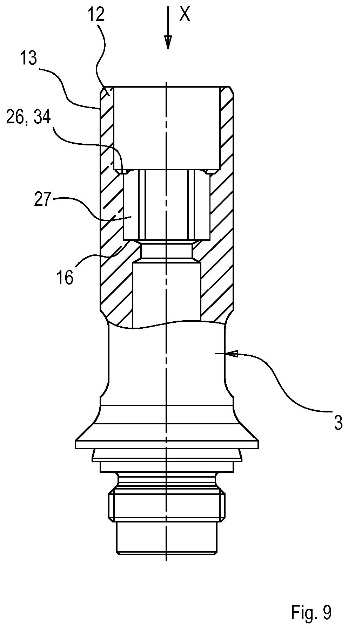

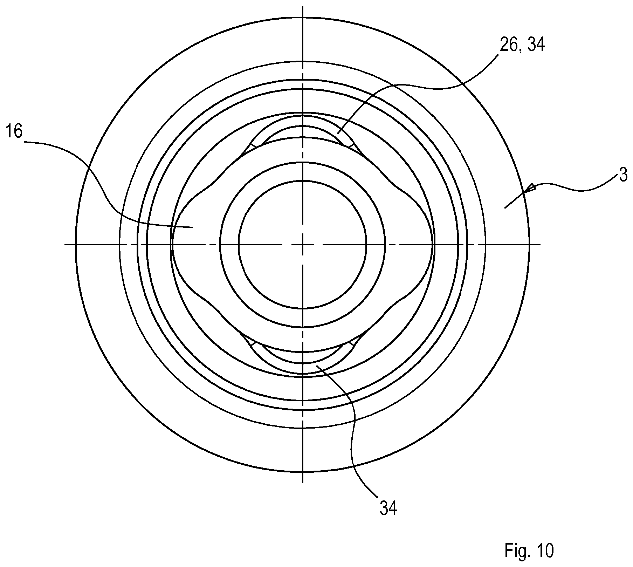

Die Figuren 9 und 10 zeigen die gegenüberliegende Rastkontur 34 der Führungshülse 3, wobei für die gleichen Teile die gleichen Bezugszeichen gelten.

Die Figur 10 zeigt dabei die Stirnansicht der Führungshülse 3 in Pfeilrichtung X nach Figur 9.

Es ist erkennbar, dass zwei axial voneinander beabstandete Führungskonturen vorhanden sind, d. h. diese beiden axial voneinander beabstandeten Flächen 26 und 16 bilden den eingerasteten und den ausgerasteten Zustand des Betätigungsknopfes 6.

Der Arretieransatz 26 bildet dabei die Rastkontur 34, die in Figur 10 dargestellt ist. Die Rastkontur besteht im Wesentlichen aus zwei diametral gegenüberliegenden Rastnasen, die auch als Arretieransätze 26 bezeichnet sind, während im Zwischenraum dazwischen zwei gegenüberliegende Anschlagflächen 26 vorhanden sind, die bogenförmig ausgebildet sind und die nicht der Verrastung dienen.

Die beiden voneinander beabstandeten Führungsflächen der Verrastung sind demnach im Bereich der Rastausnehmung 27 angeordnet.

Im eingerasteten Zustand liegt demnach die Rastnase 31 der Rasthülse 8 auf dem Arretieransatz 26 mit der Rastkontur 34 gemäß Figur 10 der Führungshülse 3 auf.

Werden hingegen die Rastnasen 31 durch Drehung der Rasthülse 8 um z. B. 90° gedreht, dann gelangen diese Rastnasen 31 nach unten in axiale Richtung durch die Rastausnehmung 27 hindurch und schlagen auf den unteren bodenseitigen Anschlagflächen der Führungshülse 3 auf. Damit ist der ausgerastete Zustand gemäß Figur 1 erreicht.

Somit ist erkennbar, dass die Rastmechanik mit den voneinander beabstandeten Führungsflächen 16, 26, 34, die im Bereich einer zentralen Rastausnehmung 27 im Innenraum der Führungshülse 3 ausgebildet sind, vollkommen im Innenraum des Betätigungsknopfes 6 abgedichtet integriert sind, so dass aus der Führungshülse 3 keinerlei radial abstehende Teile mehr vorhanden sind.

### Zeichnungslegende

1. Dichtmutter
2. Bolzen
3. Führungshülse (erste)
4. Dichtring
5. Dichtring
6. Betätigungsknopf
7. Druckfeder
8. Rasthülse
9. Stangendichtung
10. Klemmaufnahme
11.Befestigungsplatte
12. Führungshülse(zweite von 3)
13.Gleitfläche
14.Zentrale Mittenbohrung (von 6)
15. Hülsenansatz (von 8)
16.Anschlagfläche (von 3)
17.Mittenbohrung (von 8)
18. Bohrung (von 8)
19.Gewindebolzen (von 2)
20. Gewindebohrung (von 6)
21.Sackbohrung
22. Arretierzapfen
23. Pfeilrichtung
24. Pfeilrichtung
25.Längsachse
26.Arretieransatz (von 3)
27. Rastausnehmung (von 3)
28. Rastkontur (von 8)
29. Ringansatz
30. Bogenabschnitt
31.Rastnase
32.Fase
33. Rastbereich
34. Rastkontur (von 3)
35.Stirnseitenbereich

## Patentansprüche

1. Rastbolzen mit Rastmechanik (8, 16, 27, 28), mit einer an einem Maschinenteil festlegbaren Führungshülse (3) und einem mit einem Betätigungsknopf (6) verbundenen Bolzen (2), der eine zentrale Mittenbohrung (14) im Betätigungsknopf (6) durchgreift und der in einer Durchgangsbohrung der Führungshülse (3) axial entgegen und mittels der Kraft einer Druckfeder (7) durch Betätigung des Betätigungsknopfes (6) verschiebbar und festlegbar ist, wobei der Bolzen (2) mittels der in der zentralen Mittenbohrung (14) angeordneten Rastmechanik (8, 27, 28) in mindestens zwei Rastpositionen bringbar ist, wobei die Rastmechanik (8, 16, 27, 28) im Bereich der Führungshülse (3) angeordnet ist, die sich mit werkstoffeinstückigen und axialen hülsenartigen Ansätzen in die Mittenbohrung (14) des Betätigungsknopfes (6) hinein erstreckt, und aus einer fest mit dem Betätigungsknopf (6) verbundenen Rasthülse (8) besteht, die mit rasthülsenseitigen Rastkonturen (28) in Raststellung auf Rastkonturen (34) der Führungshülse (3) und in entrasteter Stellung auf bodenseitige Anschlagflächen (16) der Führungshülse (3) aufliegt, **dadurch gekennzeichnet, dass** die Rastmechanik abgedichtet im Bereich zwischen den axialen Ansätzen der Führungshülse (3) und der zentralen Mittenbohrung (14) des Betätigungsknopfes (6) angeordnet ist, und dass die Rasthülse mindestens zwei Rastnasen (31) aufweist, die im eingerasteten Zustand auf einem Arretieransatz (26) mit der Rastkontur (34) innerhalb der Führungshülse (3) aufliegen und dass im Innenraum der Führungshülse (3) gehäusefeste, gegenüberliegende Rastausnehmungen (27) angeordnet sind in die Rastnasen (31) im ausgerasteten Zustand eingreifen

2. Rastbolzen nach Anspruch 1, **dadurch gekennzeichnet, dass** am Fußende des Betätigungsknopfes (6) eine Stangendichtung (9) angeordnet ist, die abgedichtet auf dem Außenumfang der Führungshülse (3) zusammen mit dem Betätigungsknopf (6) axial verschiebbar ausgebildet ist.

3. Rastbolzen nach Anspruch 1 oder 2, **dadurch gekennzeichnet, dass** die am inneren Stirnseitenbereich (35) des Betätigungsknopfes (6) befestigte Rasthülse (8) mit ihrem Hülsenansatz in eine koaxiale, zweite axiale FührungshQlse (12) der ersten Führungshülse (3) eingreift, die durch die axialen hülsenartigen Ansätze gebildet wird.

4. Rastbolzen nach Anspruch 3, **dadurch gekennzeichnet, dass** der Außenumfang der zweiten Führungshülse (12) eine Gleitfläche (13) zum Innenumfang des Betätigungsknopfes im Bereich der zentralen Mittenbohrung (14) bildet.

5. Rastbolzen nach einem der Ansprüche 1 bis 4, **dadurch gekennzeichnet, dass** der Betätigungsknopf (6) zum Ausrasten um etwa 90° drehbar ist, bis die Rastkontur (28) der Rasthülse (8) außer Eingriff mit der gehäusefesten, gegenüberliegenden Rastausnehmung (27) an der Führungshülse (3) kommt, wodurch aufgrund der Federkraft der Druckfeder (7) der Betätigungsknopf (6) selbsttätig in die angehobene Stellung verschiebbar ist.

6. Rastbolzen nach einem der Ansprüche 1 bis 5, **dadurch gekennzeichnet, dass** insgesamt zwei Rastpositionen zwischen der Rasthülse (8) und der Führungshülse (3) vorhanden sind.

7. Rastbolzen nach einem der Ansprüche 1 bis 6, **dadurch gekennzeichnet, dass** die Rastkontur (28) der Rasthülse (8) aus zwei diametral gegenüberliegenden Rastnasen (31) besteht, die zwischen sich jeweils einen Rastbereich (33) ausbilden und dass dazwischenliegende Bogenabschnitte (30) vorhanden sind, die nicht rastend ausgebildet sind.

8. Rastbolzen nach einem der Ansprüche 1 bis 7, **dadurch gekennzeichnet, dass** die Rastkontur (28) im Bereich einer schräg im Winkel zur Längsachse verlaufenden Fase (32) ausgebildet ist, die eine Auflaufschräge auf der führungshülsenseitigen Rastkontur (34) ausbildet, so dass ein Anheben des Betätigungsknopfes (6) zwecks Betätigung nicht erforderlich ist

## Claims

1. A latch pin with a latching mechanism (8, 16, 27, 28), comprising a guide sleeve (3) that can be fixed to a machine part and a pin (2) connected to an actuating knob (6), which passes through a central bore (14) in the actuating knob (6) and which can be axially moved in a through-bore of the guide sleeve (3) and locked in place against and by means of the force of a compression spring (7) by actuating the actuating knob (6), wherein the pin (2) can be brought into at least two latching positions by means of the latching mechanism (8, 27, 28) disposed in the central bore (14), wherein the latching mechanism (8, 16, 27, 28) is disposed in the area of the guide sleeve (3), which extends into the central bore (14) of the actuating button (6) with axial sleeve-like projections made from a single piece of material, and consists of a latching sleeve (8) connected firmly to the actuating knob (6), which rests with latching contours (28) on the latching sleeve side on latching contours (34) of the guide sleeve (3) in the latched position and on stop surfaces (16) on the bottom side of the guide sleeve (3) in the unlatched position, **characterised in that** the latching mechanism is disposed in a sealed manner in the area between the axial projections of the guide sleeve (3) and the central bore (14) of the actuating knob (6), and **in that** the latching sleeve has at least two detents (31) which, in the latched state, rest on a locking projection (26) with the latching contour (34) inside the guide sleeve (3), and **in that** opposite latching recesses (27) fixed to the housing are disposed in the interior of the guide sleeve (3), into which the detents (31) engage when in the unlatched state.

2. The latch pin according to claim 1, **characterised in that** a rod seal (9) is disposed at the foot end of the actuating knob (6), which is designed to be axially displaceable in a sealed manner on the outer circumference of the guide sleeve (3) together with the actuating knob (6).

3. The latch pin according to claim 1 or 2, **characterised in that** the latching sleeve (8) fixed to the inner end face area (35) of the actuating knob (6) engages with its sleeve projection into a coaxial, second axial guide sleeve (12) of the first guide sleeve (3), which is formed by the axial sleeve-like projections.

4. The latch pin according to claim 3, **characterised in that** the outer circumference of the second guide sleeve (12) forms a sliding surface (13) to the inner circumference of the actuating knob in the area of the central bore (14).

5. The latch pin according to any one of claims 1 to 4, **characterised in that** the actuating knob (6) can be rotated by approximately 90° for unlatching until the latching contour (28) of the latching sleeve (8) disengages from the opposite locking recess (27) on the guide sleeve (3), which is fixed to the housing, whereby the operating knob (6) can be automatically moved into the raised position due to the spring force of the compression spring (7).

6. The latch pin according to any one of claims 1 to 5, **characterised in that** there are a total of two latching positions between the latching sleeve (8) and the guide sleeve (3).

7. The latch pin according to any one of claims 1 to 6, **characterised in that** the latching contour (28) of the latching sleeve (8) consists of two diametrically opposite detents (31), which each form a latching area (33) between them, and **in that** there are curved sections (30) between them which are not designed to latch.

8. The latch pin according to any one of claims 1 to 7, **characterised in that** the latching contour (28) is formed in the area of a chamfer (32) running at an angle to the longitudinal axis, which forms a run-up slope on the latching contour (34) on the guide sleeve side, so that it is not necessary to lift the actuating knob (6) for the purpose of actuation.

## Revendications

1. Boulon d'encliquetage avec mécanisme d'encliquetage (8, 16, 27, 28), comprenant une douille de guidage (3) apte à être fixée à une pièce de machine et un boulon (2) relié à un bouton d'actionnement (6), qui traverse avec prise un trou médian (14) central dans le bouton d'actionnement (6) et qui est déplaçable et fixable axialement dans un trou de passage de la douille de guidage (3) à l'encontre de la force d'un ressort de pression (7) et au moyen de celle-ci par actionnement du bouton d'actionnement (6), dans lequel le boulon (2) peut être amené dans au moins deux positions d'encliquetage au moyen du mécanisme d'encliquetage (8, 27, 28) disposé dans le trou médian (14) central, dans lequel le mécanisme d'encliquetage (8, 16, 27, 28) est disposé dans la zone de la douille de guidage (3) qui s'étend dans le trou central (14) du bouton d'actionnement (6) avec des embouts venus de matière et axiaux du type douille, et est constitué d'une douille d'encliquetage (8) solidaire du bouton d'actionnement (6), qui repose en position d'encliquetage sur des contours d'encliquetage (34) de la douille de guidage (3) avec des contours d'encliquetage (28) côté douille d'encliquetage et en position décliquetée sur des surfaces de butée (16) côté fond de la douille de guidage (3), **caractérisé en ce que** le mécanisme d'encliquetage est disposé de manière étanche dans la zone entre les embouts axiaux de la douille de guidage (3) et le trou médian (14) central du bouton d'actionnement (6), et que la douille d'encliquetage présente au moins deux becs d'encliquetage (31) qui, à l'état encliqueté, reposent sur un embout de blocage (26) avec le contour d'encliquetage (34) à l'intérieur de la douille de guidage (3) et que des évidements d'encliquetage (27) opposés fixés au boîtier, dans lesquels s'insèrent les becs d'encliquetage (31) à l'état décliqueté, sont disposés dans l'espace intérieur de la douille de guidage (3).

2. Boulon d'arrêt selon la revendication 1, **caractérisé en ce qu'**un joint de tige (9) qui est réalisé de manière à pouvoir se déplacer axialement de manière étanche sur le pourtour extérieur de la douille de guidage (3) conjointement au bouton d'actionnement (6) est disposé à l'extrémité de pied du bouton d'actionnement (6).

3. Boulon d'arrêt selon la revendication 1 ou 2, **caractérisé en ce que** la douille d'encliquetage (8) fixée sur la zone frontale intérieure (35) du bouton d'actionnement (6) s'insère avec son embout de douille dans une deuxième douille de guidage (12) axiale, coaxiale de la première douille de guidage (3), qui est formée par les embouts axiaux de type douille.

4. Boulon d'arrêt selon la revendication 3, **caractérisé en ce que** le pourtour extérieur de la deuxième douille de guidage (12) forme une surface de glissement (13) par rapport au pourtour intérieur du bouton d'actionnement dans la zone du trou médian (14) central.

5. Boulon d'arrêt selon l'une des revendications 1 à 4, **caractérisé en ce que** le bouton d'actionnement (6) peut être pivoté d'environ 90° pour se décliqueter jusqu'à ce que le contour d'encliquetage (28) de la douille d'encliquetage (8) vienne hors de prise avec l'évidement d'encliquetage (27) opposé, fixé au boîtier sur la douille de guidage (3), ce qui a pour effet que le bouton d'actionnement (6) peut être déplacé automatiquement dans la position relevée en raison de la force de rappel du ressort de pression (7).

6. Boulon d'arrêt selon l'une des revendications 1 à 5, **caractérisé en ce qu'**au total deux positions d'encliquetage entre la douille d'encliquetage (8) et la douille de guidage (3) sont présentes.

7. Boulon d'arrêt selon l'une des revendications 1 à 6, **caractérisé en ce que** le contour d'encliquetage (28) de la douille d'encliquetage (8) est constitué de deux becs d'encliquetage (31) diamétralement opposés, qui forment respectivement entre eux une zone d'encliquetage (33) et que des sections courbes (30) intermédiaires, qui ne sont pas réalisées de manière encliquetable, sont présentes.

8. Boulon d'arrêt selon l'une des revendications 1 à 7, **caractérisé en ce que** le contour d'encliquetage (28) est réalisé dans la zone d'un chanfrein (32) s'étendant obliquement par rapport à l'axe longitudinal, qui réalise un chanfrein d'appui sur le contour d'encliquetage (34) côté douille de guidage, de telle sorte qu'un soulèvement du bouton d'actionnement (6) ne soit pas nécessaire pour l'actionnement.
